# EUROPEAN PATENT APPLICATION

(11) **EP 4 600 475 A1**
(43) Date of publication of application: **13.08.2025**
(21) Application number: 25155518.1
(22) Date of filing: 03.02.2025
(51) Int. Cl.: F02C 6/18, F01D 15/00, H02S 10/30, F02K 3/115

(54) **THERMOPHOTOVOLTAIC ENERGY CONVERSION IN GAS TURBINE ENGINE**

(30) Priority: 06.02.2024 US 202418433665
(71) Applicant: Hamilton Sundstrand Corporation, Charlotte, NC 28217-4578 (US)
(72) Inventor: SPRINGER, Chad Aaron, Cherry Valley, IL (US); PAL, Debabrata, Hoffman Estates, IL (US)
(74) Representative: Dehns

(57) **Abstract**

A gas turbine engine includes a combustor section (26), and a turbine section (28) including a turbine configured to be driven by a flow of combustion products from the combustor section (26). A thermophotovoltaic cell (64) is positioned at at least one of the combustor section (26) or the turbine section (28). The thermophotovoltaic cell (64) is configured to convert radiant heat energy from at least one of the combustor section (26) or the turbine section (28) into electrical energy. A method of operating a gas turbine engine includes combusting a mixture of fuel and air at a combustor section (26), driving a turbine of a turbine section (28) via urging of combustion products from the combustor section (26) to the turbine, and converting radiant thermal energy from at least one of the combustor section (26) or the turbine section (28) to electrical energy via a thermophotovoltaic cell (64) positioned at at least one of the combustor section (26) or the turbine section (28).

## Description

### BACKGROUND

Exemplary embodiments pertain to the art of gas turbine engines, and in particular to electrical power generation via a gas turbine engine.

As aircraft energy requirements increase, and a desire for improved energy generation efficiency also increases, it is desired to reduce losses in energy conversion in aircraft systems, such as the propulsion system, typically a gas turbine engine. Energy generated and distributed throughout an aircraft experiences a significant amount of loss as the energy is converted from one form to another, i.e. from mechanical to electrical energy. As a result, uncaptured energy in the form of heat is essentially wasted as it is released into the surrounding environment without being redirected back to a useable source.

### BRIEF DESCRIPTION

In one exemplary embodiment, a gas turbine engine includes a combustor section, and a turbine section including a turbine configured to be driven by a flow of combustion products from the combustor section. A thermophotovoltaic cell is positioned at at least one of the combustor section or the turbine section. The thermophotovoltaic cell is configured to convert radiant heat energy from at least one of the combustor section or the turbine section into electrical energy.

Additionally or alternatively, in this or other embodiments the thermophotovoltaic cell includes a first side positioned closest to one of the combustor section or the turbine section and a second side opposite the first side. The gas turbine engine further includes a heat sink positioned at the second side in thermal communication with the thermophotovoltaic cell.

Additionally or alternatively, in this or other embodiments a scoop pathway is configured to direct a cooling airflow through the heat sink.

Additionally or alternatively, in this or other embodiments the scoop pathway includes a scoop inlet configured to direct the cooling airflow from a bypass flowpath of the gas turbine engine into the scoop pathway.

Additionally or alternatively, in this or other embodiments a scoop outlet is configured to direct the cooling airflow from the scoop pathway into the bypass flowpath downstream of the scoop inlet.

Additionally or alternatively, in this or other embodiments the thermophotovoltaic cell is a plurality of thermophotovoltaic cells arrayed along one or more of an axial direction and a circumferential direction relative to an engine central longitudinal axis.

Additionally or alternatively, in this or other embodiments a power distribution system is connected to the thermophotovoltaic cell and is configured for storage and distribution of electrical energy generated by the thermophotovoltaic cell.

In another exemplary embodiment, a gas turbine engine includes a combustor section, a turbine section including a turbine configured to be driven by a flow of combustion products from the combustor section, and a fan section operably connected to the turbine section and configured to direct a bypass airflow along a bypass flowpath. A thermophotovoltaic cell is positioned at at least one of the combustor section or the turbine section. The thermophotovoltaic cell is configured to convert radiant heat energy from at least one of the combustor section or the turbine section into electrical energy.

Additionally or alternatively, in this or other embodiments the thermophotovoltaic cell includes a first side positioned closest to one of the combustor section or the turbine section and a second side opposite the first side. The gas turbine engine further includes a heat sink positioned at the second side in thermal communication with the thermophotovoltaic cell.

Additionally or alternatively, in this or other embodiments a scoop pathway is configured to direct a cooling airflow through the heat sink, the cooling airflow directed from the bypass flowpath.

Additionally or alternatively, in this or other embodiments the scoop pathway includes a scoop inlet configured to direct the cooling airflow from the bypass flowpath of the gas turbine engine into the scoop pathway, and a scoop outlet configured to direct the cooling airflow from the scoop pathway into the bypass flowpath downstream of the scoop inlet.

Additionally or alternatively, in this or other embodiments the thermophotovoltaic cell is a plurality of thermophotovoltaic cells arrayed along one or more of an axial direction and a circumferential direction relative to an engine central longitudinal axis.

Additionally or alternatively, in this or other embodiments the thermophotovoltaic cell includes a first side positioned closest to one of the combustor section or the turbine section and a second side opposite the first side. The gas turbine engine further includes a plurality of heat sinks positioned at the second side. Each heat sink of the plurality of heat sinks is in thermal communication with a selected thermophotovoltaic cell of the plurality of thermophotovoltaic cells. A scoop pathway is configured to direct a cooling airflow through the plurality of heat sinks. The cooling airflow is directed from the bypass flowpath.

Additionally or alternatively, in this or other embodiments a power distribution system is connected to the thermophotovoltaic cell and is configured for distribution and storage of electrical energy generated by the thermophotovoltaic cell.

In yet another exemplary embodiment, a method of operating a gas turbine engine includes combusting a mixture of fuel and air at a combustor section, driving a turbine of a turbine section via urging of combustion products from the combustor section to the turbine, and converting radiant thermal energy from at least one of the combustor section or the turbine section to electrical energy via a thermophotovoltaic cell positioned at at least one of the combustor section or the turbine section.

Additionally or alternatively, in this or other embodiments the thermophotovoltaic cell includes a first side positioned closest to one of the combustor section or the turbine section and a second side opposite the first side. A heat sink is positioned at the second side in thermal communication with the thermophotovoltaic cell.

Additionally or alternatively, in this or other embodiments a cooling airflow is directed through the heat sink via a scoop pathway.

Additionally or alternatively, in this or other embodiments the cooling airflow is directed along the scoop pathway from a scoop inlet configured to direct the cooling airflow from a bypass flowpath of the gas turbine engine into the scoop pathway.

Additionally or alternatively, in this or other embodiments the cooling airflow is directed from the scoop pathway via a scoop outlet configured to direct the cooling airflow from the scoop pathway into the bypass flowpath downstream of the scoop inlet.

Additionally or alternatively, in this or other embodiments the thermophotovoltaic cell is a plurality of thermophotovoltaic cells arrayed along one or more of an axial direction and a circumferential direction relative to an engine central longitudinal axis.

### BRIEF DESCRIPTION OF THE DRAWINGS

The following descriptions should not be considered limiting in any way. With reference to the accompanying drawings, like elements are numbered alike:
FIG. 1 is a partial schematic illustration of an exemplary embodiment of a gas turbine engine;
FIG. 2 is another cross-sectional view of an exemplary embodiment of a gas turbine engine; and
FIG. 3 is an illustration of an arrangement of a thermophotovoltaic cell and heat sink in a gas turbine engine.

### DETAILED DESCRIPTION

A detailed description of one or more embodiments of the disclosed apparatus and method are presented herein by way of exemplification and not limitation with reference to the Figures.

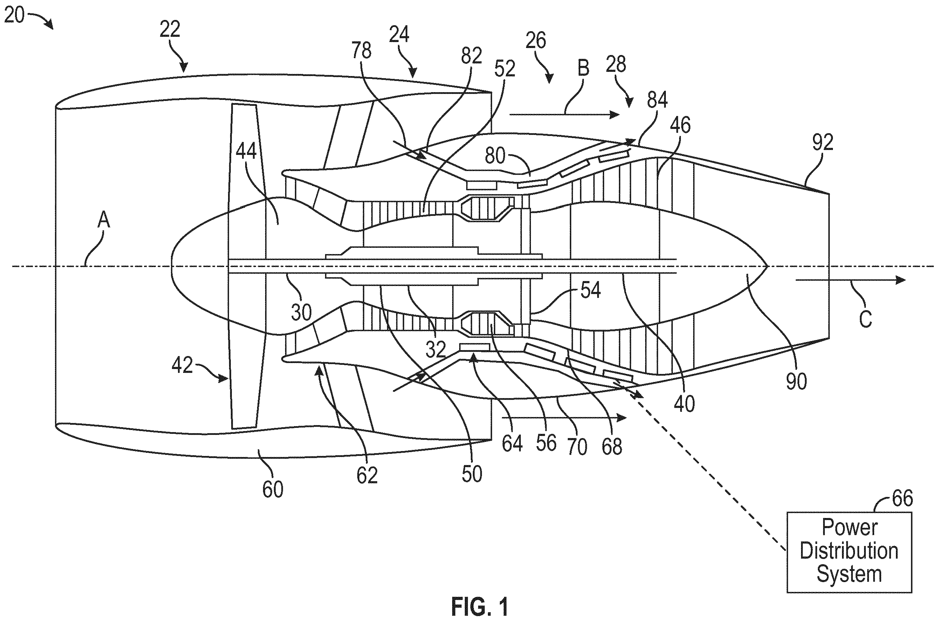

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A. The low speed spool 30 generally includes an inner shaft 40 that interconnects a fan 42, a low pressure compressor 44 and a low pressure turbine 46. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied.

To at least partially define the bypass flowpath B, the fan section 22 is enclosed in a fan case 60, while a core section of the gas turbine engine 20, in some embodiments including the compressor section 24, the combustor section 26 and the turbine section 28, is enclosed in a core case 62. The bypass flowpath B is then defined at least partially radially between the core case 62 and the fan case 60.

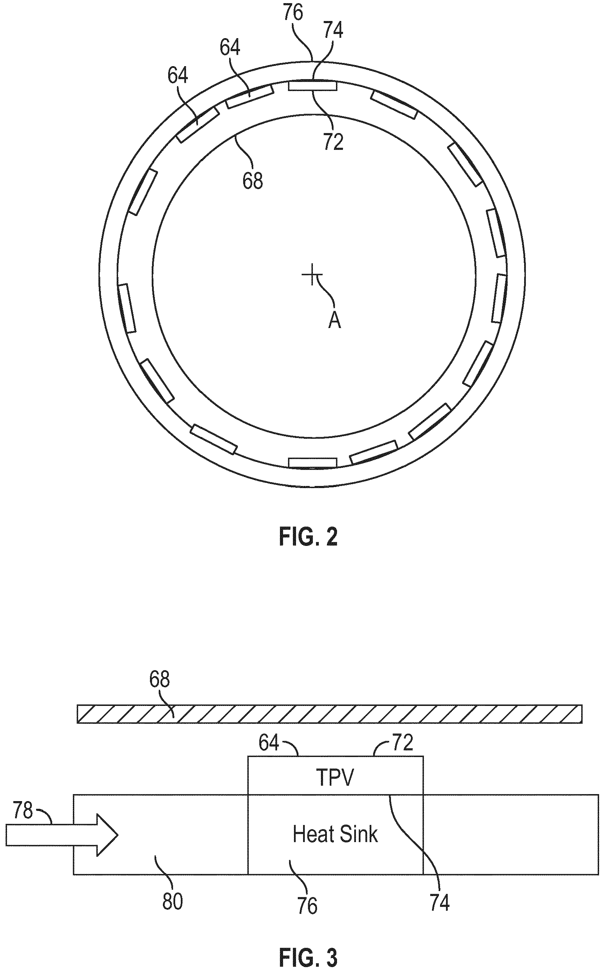

A large amount of thermal energy is generated at portions of the gas turbine engine, such as at the combustor section 26 and at the turbine section 28 and expelled to their respective surrounding environments. A plurality of thermophotovoltaic (TPV) cells 64 are disposed in the core case 62 to convert waste thermal energy into electrical energy. The converted electrical energy may then be collected and distributed throughout the aircraft where load demands exist via a power distribution system 66. The TPV cells 64 may be located, for example, between a radially inner wall 68 of the core case 62 and a radially outer wall 70 of the core case 62. The TPV cells 64 may be arranged axially along the combustor section 26 and/or along the turbine section 28 and, referring to FIG. 2, may be further arrayed about the engine central longitudinal axis A.

Referring again to FIG. 1 and further with reference to FIG. 3, the TPV cells 64 are operable by an emitter temperature facing the TPV cell 64. As such, the TPV cells 64 are oriented to have a first side 72 at a first temperature located radially closest to the source of the waste thermal energy, and a second side 74 at a second temperature located radially furthest from the source of radiant thermal energy. To ensure cooling of the second side 74, a heat sink 76 is located at the second side 74, in some embodiments abutting the second side 74 to dissipate heat from the second side 74 and cool the second side 74 so the desired TPV temperature is maintained. To dissipate the heat a portion of the airflow 78 from the bypass flowpath B is diverted through a scoop pathway 80 having a scoop inlet 82 at the bypass flowpath B upstream of the TPV cells 64 and their associated heat sinks 76. After passing through the heat sinks 76, the airflow 78 exits the scoop pathway 80 via a scoop outlet 84 located downstream of the TPC cells 64 and their associated heat sinks 76. While in the embodiment of FIG. 1, one scoop pathway 80 directs airflow 78 through multiple heat sinks 76, this configuration is merely exemplary. One skilled in the art will readily appreciate that the arrangement may have other configurations, such as each heat sink 76 having its own scoop pathway 80. Further, multiple scoop pathways 80 may be arrayed around the engine central longitudinal axis A to meet the cooling needs of the TPV cells 64.

Inclusion of the TPV cells 64 captures radiant heat energy from the combustor section 26 and the turbine section 28 of the gas turbine engine 20. While in the embodiments discussed herein the TPV cells 64 are shown and described at these locations, one skilled in the art will readily appreciate that the TPV cells 64 may be located at other portions of the gas turbine engine 20, such as an exhaust cone 90 or exhaust portion 92 of the core case 62. Converting the radiated heat energy to electrical energy improves the electrical energy generation capability of the gas turbine engine 20 and improves the operational efficiency of the gas turbine engine 20., due to, for example, the gas turbine engine 20 needing to provide less work for other power generating equipment.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A gas turbine engine, comprising:
a combustor section (26);
a turbine section (28) including a turbine configured to be driven by a flow of combustion products from the combustor section (26); and
a thermophotovoltaic cell (64) disposed at at least one of the combustor section (26) or the turbine section (28), the thermophotovoltaic cell (64) configured to convert radiant heat energy from at least one of the combustor section (26) or the turbine section (28) into electrical energy.

2. The gas turbine engine of claim 1, wherein the thermophotovoltaic cell (64) includes a first side disposed closest to one of the combustor section (26) or the turbine section (28) and a second side opposite the first side, the gas turbine engine further comprising a heat sink disposed at the second side in thermal communication with the thermophotovoltaic cell (64).

3. The gas turbine engine of claim 2, further comprising a scoop pathway (80) configured to direct a cooling airflow through the heat sink.

4. The gas turbine engine of claim 3, wherein the scoop pathway (80) includes a scoop inlet configured to direct the cooling airflow from a bypass flowpath of the gas turbine engine into the scoop pathway (80).

5. The gas turbine engine of claim 4, further comprising a scoop outlet (84) configured to direct the cooling airflow from the scoop pathway (80) into the bypass flowpath downstream of the scoop inlet.

6. The gas turbine engine of claim 1, wherein the thermophotovoltaic cell (64) is a plurality of thermophotovoltaic cells arrayed along one or more of an axial direction and a circumferential direction relative to an engine central longitudinal axis.

7. The gas turbine engine of any preceding claim, further comprising a power distribution system connected to the thermophotovoltaic cell (64) and configured for storage and distribution of electrical energy generated by the thermophotovoltaic cell (64).

8. A gas turbine engine, comprising:
a combustor section (26);
a turbine section (28) including a turbine configured to be driven by a flow of combustion products from the combustor section (26);
a fan section operably connected to the turbine section (28) and configured to direct a bypass airflow along a bypass flowpath; and
a thermophotovoltaic cell (64) disposed at at least one of the combustor section (26) or the turbine section (28), the thermophotovoltaic cell (64) configured to convert radiant heat energy from at least one of the combustor section (26) or the turbine section (28) into electrical energy.

9. The gas turbine engine of claim 8, wherein the thermophotovoltaic cell (64) includes a first side disposed closest to one of the combustor section (26) or the turbine section (28) and a second side opposite the first side, the gas turbine engine further comprising a heat sink disposed at the second side in thermal communication with the thermophotovoltaic cell (64).

10. The gas turbine engine of claim 9, further comprising a scoop pathway (80) configured to direct a cooling airflow through the heat sink, the cooling airflow directed from the bypass flowpath, and optionally wherein the scoop pathway (80) includes:
a scoop inlet configured to direct the cooling airflow from the bypass flowpath of the gas turbine engine into the scoop pathway (80); and
a scoop outlet (84) configured to direct the cooling airflow from the scoop pathway (80) into the bypass flowpath downstream of the scoop inlet.

11. The gas turbine engine of claim 8, wherein the thermophotovoltaic cell (64) is a plurality of thermophotovoltaic cells arrayed along one or more of an axial direction and a circumferential direction relative to an engine central longitudinal axis, and optionally wherein the thermophotovoltaic cell (64) includes a first side disposed closest to one of the combustor section (26) and the turbine section (28) and a second side opposite the first side, the gas turbine engine further comprising:
a plurality of heat sinks disposed at the second side, each heat sink of the plurality of heat sinks in thermal communication with a selected thermophotovoltaic cell (64) of the plurality of thermophotovoltaic cells; and
a scoop pathway (80) configured to direct a cooling airflow through the plurality of heat sinks, the cooling airflow directed from the bypass flowpath.

12. The gas turbine engine of any of claims 8-11, further comprising a power distribution system connected to the thermophotovoltaic cell (64) and configured for distribution and storage of electrical energy generated by the thermophotovoltaic cell (64).

13. A method of operating a gas turbine engine, comprising:
combusting a mixture of fuel and air at a combustor section (26);
driving a turbine of a turbine section (28) via urging of combustion products from the combustor section (26) to the turbine; and
converting radiant thermal energy from at least one of the combustor section (26) or the turbine section (28) to electrical energy via a thermophotovoltaic cell (64) disposed at at least one of the combustor section (26) or the turbine section (28).

14. The method of claim 13, wherein the thermophotovoltaic cell (64) includes a first side disposed closest to one of the combustor section (26) or the turbine section (28) and a second side opposite the first side, the method further comprising:
operating a heat sink disposed at the second side in thermal communication with the thermophotovoltaic cell (64), and optionally further comprising directing a cooling airflow through the heat sink via a scoop pathway (80), and optionally further comprising directing the cooling airflow along the scoop pathway (80) from a scoop inlet configured to direct the cooling airflow from a bypass flowpath of the gas turbine engine into the scoop pathway (80), and optionally further comprising directing the cooling airflow from the scoop pathway (80) via a scoop outlet (84) configured to direct the cooling airflow from the scoop pathway (80) into the bypass flowpath downstream of the scoop inlet.

15. The method of claim 13, wherein the thermophotovoltaic cell (64) is a plurality of thermophotovoltaic cells arrayed along one or more of an axial direction and a circumferential direction relative to an engine central longitudinal axis.
